# EUROPEAN PATENT APPLICATION

(11) **EP 4 585 359 A1**
(43) Date of publication of application: **16.07.2025**
(21) Application number: 24190471.3
(22) Date of filing: 23.07.2024
(51) Int. Cl.: B23P 19/04, B23P 19/02, B23P 19/10, B23P 21/00, B25B 27/10, B25J 15/00, B25J 15/02

(54) **A CLAMPING DEVICE FOR TWO WORKPIECES**

(30) Priority: 10.01.2024 CN 202420068592 U
(71) Applicant: Global Manufacturing Partners Holdings Limited, Kowloon Bay Kowloon (HK)
(72) Inventor: CHIU, Wilson, Kowloon (HK)
(74) Representative: Valet Patent Services Limited

(57) **Abstract**

This invention introduces a two-workpiece clamping device . The arrangement of a first driving mechanism on the first body facilitates the vertical movement of the second body. This movement drives a first clamping block to descend into position, clamping the first workpiece with the first slot and simultaneously driving a second clamping block to descend into position to clamp the second workpiece with the second slot. The setup of the second driving mechanism, as well as the first blocking part on the first clamping block and the second blocking part on the second clamping block, makes it efficient to drive the second clamping block closer to the first clamping block, effectively clamping the first and second workpieces together.

## Description

### CROSS-REFERENCE TO RELATED APPLICATIONS

This application claims the benefit and priority of Chinese patent application No. 202420068592.X, filed on January 10, 2024, disclosure of which is hereby incorporated by reference in its entirety.

### TECHNICAL FIELD

This invention relates to a clamping device for two workpieces.

### BACKGROUND

Recently, there are two main methods to clamp two separately placed workpieces together. The first method uses a larger clamping component to gradually clamp the two workpieces together from their outer ends. This method can often lead to misalignment during the clamping process, especially when one of the workpieces is a spring, which necessitates a solution. The second method uses two clamping components, each holding one workpiece, and then moves them together. This method requires more moving parts for clamping, making it inconvenient to implement and not suitable for directly assembling the clamped workpieces into a third component, which necessitates a solution.

### SUMMARY

This invention overcomes the aforementioned deficiencies by providing a clamping device for two workpieces. To achieve the stated objective, the invention employs the following technical solutions:

A clamping device for two workpieces, includes a first body 1. This first body 1 is connected via a first driving mechanism 2 to a second body 3 capable of moving up and down. The second body 3 is equipped with a first clamping block 4 and connected through a second driving mechanism 5 to a second clamping block 6 capable of moving laterally to approach or move away from the first clamping block 4. The first clamping block 4 has a downwardly open and outwardly open first slot 41 for clamping down a first workpiece 101 or allowing the first workpiece 101 to be inserted from below when in position. The second clamping block 6 has a downwardly open and outwardly open second slot 61 for clamping down a second workpiece 102 or allowing the second workpiece 102 to be inserted from below when in position. The space formed between the first slot 41 and the second slot 61 holds the first workpiece 101 and the second workpiece 102 together. The first clamping block 4 includes a first blocking part 42 to prevent the first workpiece 101 from moving away from the second workpiece 102 when clamped together, and the second clamping block 6 includes a second blocking part 62 to prevent the second workpiece 102 from moving away from the first workpiece 101.

In one embodiment, the second slot 61 is open from side to side, and the second blocking part 62 is composed of two pieces positioned on the inner side walls of the second slot 61 at the front and back.

In an embodiment of the present disclosure, the second workpiece 102 is a spring, and the end of the first workpiece 101 facing the second workpiece 102 is designed with an opening to allow the end of the spring to extend into it.

In an embodiment of the present disclosure, the first driving mechanism 2 and the second driving mechanism 5 are also using a cylinder mechanism.

In an embodiment of the present disclosure, the device further includes a third body 7, which is connected via a third driving mechanism 8 to the first body 1 capable of lateral movement. This setup allows the third body 7 to drive the second body 3 to move laterally, enhancing usability.

Compared with prior art, the beneficial effects of the present invention are:

1. The structure of the present disclosure is simple and easy to implement. The setting of the first driving mechanism on the first body is convenient to drive the second body to move up and down, thereby driving the first clamping block to move downward and when in place, clamp the first workpiece through the first slot and drive the second clamping block to move downward and when in place, clamp the second workpiece through the second slot, with good practicability. And the setting of the second driving mechanism, as well as the setting of the first blocking part of the first clamping block and the setting of the second blocking part of the second clamping block, are convenient to effectively clamp the first workpiece and the second workpiece together when driving the second clamping block close to the first clamping block, and the first clamping block and the second clamping block are not separate movable clamping jaw mechanisms respectively, occupying less space, which is beneficial to the subsequent situation of clamping and assembling the first workpiece and the second workpiece when they are clamped together into the third workpiece, with good practicability.

### BRIEF DESCRIPTION OF DRAWINGS

FIG. 1 is one of the structural diagrams of the present disclosure;
FIG. 2 is the second structural diagram of the present disclosure;
FIG. 3 is the third structural diagram of the present disclosure;
FIG. 4 is the fourth structural diagram of the present disclosure;
FIG. 5 is a diagram of 102 sets of the second workpiece installed on the rod body in the present disclosure.

### DETAILED DESCRIPTION OF ILLUSTRATIVE EMBODIMENTS

The following describes in detail the characteristics of the present invention and other related characteristics through embodiments, so as to facilitate the understanding of the technicians in the same industry:

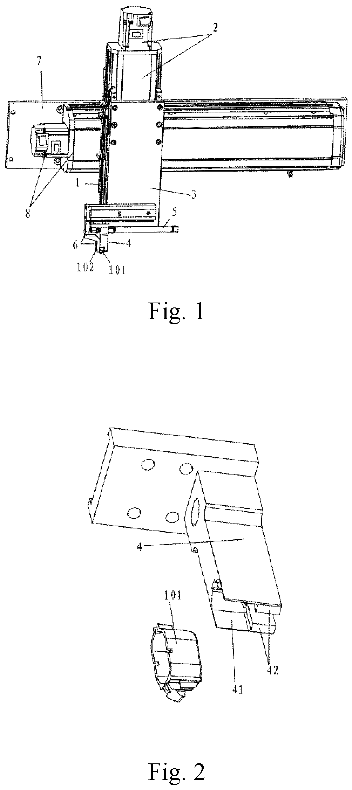

As shown in FIGs. 1 to 5, a clamping device for two workpieces, includes a first body 1. This first body 1 is connected via a first driving mechanism 2 to a second body 3 capable of moving up and down. The second body 3 is equipped with a first clamping block 4 and connected through a second driving mechanism 5 to a second clamping block 6 capable of moving laterally to approach or move away from the first clamping block 4. The first clamping block 4 has a downwardly open and outwardly open first slot 41 for clamping down a first workpiece 101 or allowing the first workpiece 101 to be inserted from below when in position. The second clamping block 6 has a downwardly open and outwardly open second slot 61 for clamping down a second workpiece 102 or allowing the second workpiece 102 to be inserted from below when in position. The space formed between the first slot 41 and the second slot 61 holds the first workpiece 101 and the second workpiece 102 together. The first clamping block 4 includes a first blocking part 42 to prevent the first workpiece 101 from moving away from the second workpiece 102 when clamped together, and the second clamping block 6 includes a second blocking part 62 to prevent the second workpiece 102 from moving away from the first workpiece 101.

As mentioned above, the structure of the present disclosure is simple and easy to implement. The setting of the first driving mechanism 2 on the first body 1 is convenient to drive the second body 3 to move up and down, thereby driving the first clamping block 4 to move downward and when in place, clamp the first workpiece 101 through the first slot 41 and drive the second clamping block 6 to move downward and when in place, clamp the second workpiece 102 through the second slot 61, with good practicability. And the setting of the second driving mechanism 5, as well as the setting of the first blocking part 42 of the first clamping block 4 and the setting of the second blocking part 62 of the second clamping block 6, are convenient to effectively clamp the first workpiece 101 and the second workpiece 102 together when driving the second clamping block 6 close to the first clamping block 4, and the first clamping block 4 and the second clamping block 6 are not separate movable clamping jaw mechanisms respectively, occupying less space, which is beneficial to the subsequent situation of clamping and assembling the first workpiece 101 and the second workpiece 102 when they are clamped together into the third workpiece, with good practicability.

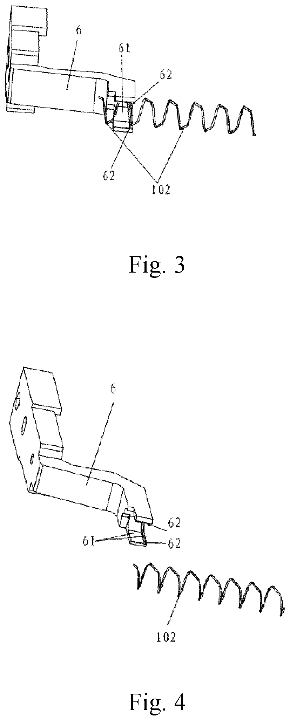

As shown in FIGs. 3 and 4, when implemented specifically, the second slot 61 communicates left and right, and the second blocking part 62 is two pieces and they are relatively arranged on the front and rear inner sidewalls of the second slot 61. In this way, it is convenient for the left and right extension of the second workpiece 102.

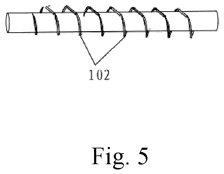

As shown in FIG. 5, before clamping, first sleeve the second workpiece 102 on the rod body through a machine or manually, and then the second slot 61 of the second clamping block 6 is clamped downward towards the rod body in order to clamp the second workpiece 102, and then move in one of the left and right directions to drive the second workpiece 102 to be separated from the rod body, and its implementation is convenient.

As shown in FIGs. 3 and 4, the second workpiece 102 is a spring, and the end of the first workpiece 101 facing the second workpiece 102 is designed with an opening to allow the end of the spring to extend into it.

As described, the first and second driving mechanisms each use a cylinder mechanism for practical implementation.

As shown in FIG. 1, the device also includes a third body 7, which is connected via a third driving mechanism 8 to the first body 1 capable of lateral movement. This setup allows the third body 7 to drive the second body 3 to move left and right, enhancing usability.

As described, the present disclosure protects a clamping device for two workpieces, and all technical solutions that are the same or similar to the present disclosure should be considered to fall within the scope of protection of the present disclosure.

## Claims

1. A clamping device for two workpieces, includes a first body (1). This first body (1) is connected via a first driving mechanism (2) to a second body (3) capable of moving up and down. The second body (3) is equipped with a first clamping block (4) and connected through a second driving mechanism (5) to a second clamping block (6) capable of moving laterally to approach or move away from the first clamping block (4). The first clamping block (4) has a downwardly open and outwardly open first slot (41) for clamping down a first workpiece (101) or allowing the first workpiece (101) to be inserted from below when in position. The second clamping block (6) has a downwardly open and outwardly open second slot (61) for clamping down a second workpiece (102) or allowing the second workpiece (102) to be inserted from below when in position. The space formed between the first slot (41) and the second slot (61) holds the first workpiece (101) and the second workpiece (102) together. The first clamping block (4) includes a first blocking part (42) to prevent the first workpiece (101) from moving away from the second workpiece (102) when clamped together, and the second clamping block (6) includes a second blocking part (62) to prevent the second workpiece (102) from moving away from the first workpiece (101).

2. A two workpiece clamping device according to claim 1, wherein the second slot (61) is open from side to side, and the second blocking part (62) is composed of two pieces positioned on the inner side walls of the second slot (61) at the front and back.

3. A two workpiece clamping device according to claim 1, wherein the second workpiece (102) is a spring, and the end of the first workpiece (101) facing the second workpiece (102) is designed with an opening to allow the end of the spring to extend into it.

4. A two workpiece clamping device according to claim 1, wherein the first driving mechanism (2) and the second driving mechanism (5) are also using a cylinder mechanism.

5. A two workpiece clamping device according to claim 1, wherein the device further includes a third body (7), which is connected via a third driving mechanism (8) to the first body (1) capable of lateral movement. This setup allows the third body (7) to drive the second body (3) to move laterally.
